# EUROPEAN PATENT SPECIFICATION

(11) **EP 4 536 516 B1**
(45) Date of publication and mention of the grant of the patent: **06.05.2026**
(21) Application number: 23736857.6
(22) Date of filing: 13.06.2023
(51) Int. Cl.: B60T 1/10, B60T 13/06, F16D 61/00, B60T 1/06

(54) **ACTUATING DEVICE WHICH CAN BE COUPLED TO A ROTATING SHAFT, PREFERABLY OF A MOTOR TRANSPORT VEHICLE, FOR THE REDUCTION OF ENERGY CONSUMPTION, A VEHICLE WITH SUCH AN ACTUATING DEVICE, AND -METHOD OF USE OF SUCH AN ACTUATING DEVICE**
AN EINE ROTIERENDE WELLE, VORZUGSWEISE EINES KRAFTFAHRZEUGS, ANKOPPELBARE BETÄTIGUNGSVORRICHTUNG ZUR REDUZIERUNG DES ENERGIEBEDARFS, FAHRZEUG MIT EINER DERARTIGEN BETÄTIGUNGSVORRICHTUNG UND VERFAHREN ZUR VERWENDUNG EINER DERARTIGEN BETÄTIGUNGSVORRICHTUNG
DISPOSITIF D'ACTIONNEMENT ACCOUPLÉ À UN ARBRE ROTATIF, DE PRÉFÉRENCE D'UN VÉHICULE DE TRANSPORT MOTORISÉ, POUR RÉDUIRE LA CONSOMMATION D'ÉNERGIE, VÉHICULE ÉQUIPÉ D'UN TEL DISPOSITIF D'ACTIONNEMENT ET PROCÉDÉ D'UTILISATION D'UN TEL DISPOSITIF

(30) Priority: 13.06.2022 IT 202200012503
(43) Date of publication of application: 16.04.2025
(73) Proprietor: MOTIVRA S.r.l, 25050 Monte Isola (BS) (IT)
(72) Inventor: SOARDI, Diego, 25058 Sulzano (BS) (IT); GUERINI, Gianantonio, 25050 Monte Isola (IT); ARCHETTI, Marco, 25058 Monste Isola (IT)
(74) Representative: Brunacci, Marco
(86) International application number: PCT/IB2023/056097
(87) International publication number: WO 2023/242738

(56) References cited:
- DE-T5- 112016 005 158
- RU-C1- 2 509 241
- RU-U1- 208 104
- RU-U1- 210 770

## Description

### Technical Field

The present invention relates to an actuating device which can be coupled to a rotating shaft, preferably of a motor transport vehicle, for the reduction of energy consumption.

### Background Art

The present invention has a preferred, but not exclusive, application in the field of motor transport vehicles, such as lorries, tractor-trailers, trucks, trains, cars and the like.

However, the possibility of application in different areas where there is a rotating shaft controlled by an actuation system cannot be ruled out, such as e.g. within industrial systems having axes of rotation driven by electrical or mechanical apparatuses.

As is well known, transport vehicles are usually provided with at least one rotating shaft that holds a pair of wheels and a motor that sets the rotating shaft into rotation, consequently moving the vehicle along a direction of travel. Such transport vehicles are also provided with a braking system which allows slowing down the movement of the vehicle.

During the use of a transport vehicle, it is usual to experience a succession of situations which require deceleration, such as e.g. when approaching a curve or a traffic light, followed by acceleration of the vehicle. Such situations require the application by the engine and by the braking system of appropriate forces operating on the rotating shaft to control the rotational speed thereof, while at the same time resulting in high energy consumption by the engine and extreme wear and tear on the braking system. In the particular case of internal combustion engines, such situations also result in high fuel consumption with consequent impact in economic and environmental terms.

It has, in fact, been verified how the greatest consumption of a vehicle occurs during the phase of acceleration, especially in the case of large vehicles.

Nowadays, it is known that about 60% of the EU's total emissions come from transportation, agriculture, construction and waste management. Right now, the target set by the European community is to reduce emissions from these means of transportation by 30% by 2030 compared to 2005 levels.

In addition, it is known that 15% of C02 emissions in Europe are produced by vehicles such as cars and vans. Updates to EU and non-EU standards set C02 emission reduction targets for new cars and vans that are 37.5% and 31% respectively to be achieved by 2030.

Therefore, the problem of being able to achieve increasingly significant reductions in the energy consumption of transportation vehicles appears to be an increasingly pressing issue.

In this context, the Applicants envisioned developing an actuating device which can be applied to a rotating shaft, such as e.g. the wheel-support axle of a vehicle, to suitably vary its moment of inertia in order to decrease the strain on the engine and on the braking system required to vary the rotating shaft's rotational speed. It has been verified that by means of such an actuating device it is possible to reduce the wear and tear of the braking system and the consumption of the engine, and thus the emission of CO2 and other pollutants into the air. The document RU2509241 C1 gives an example of a state of the art adjustable inertia flywheel.

### Description of the Invention

Therefore, the main aim of the present invention is to make an actuating device applicable to a rotating shaft which allows reducing the work of external forces required to vary the rotational speed of the rotating shaft.

A further object of the present invention is to make an actuating device that is easily and quickly applied to a rotating shaft.

Another object of the present invention is to devise an actuating device which allows the aforementioned drawbacks of the prior art to be overcome within the framework of a simple, rational, easy and effective to use as well as low cost solution.

The above objects are achieved by this actuating device having the characteristics of claim 1.

Another embodiment of the present invention is to make a motor transport vehicle having the characteristics of claim 9.

Still a further embodiment of the present invention is to develop a method of using the actuating device having the characteristics of claim 10.

### Brief Description of the Drawings

Other characteristics and advantages of the present invention will become more apparent from the description of a preferred, but not exclusive, embodiment of an actuating device, illustrated by way of an indicative, yet non-limiting example, in the accompanying tables of drawings in which:
- Figure 1 is a side cross-sectional view of the actuating device applied to a rotating shaft in accordance with the present invention,
- Figures 2 and 3 are cross-sectional views of the rotor body of the device in Figure 1,
- Figures 4 and 5 are rear and front views of part of the movement means of the device in Figure 1,
- Figure 6 is a side view of the movement means in Figure 4.

### Embodiments of the Invention

With particular reference to these figures, reference numeral 1 globally indicates an actuating device which can be coupled to a rotating shaft A intended for the reduction of energy consumption.

By rotating shaft A is meant an element, preferably elongated in shape, which is adapted to rotate around its own axis of revolution X2.

Preferably, the rotating shaft A has a substantially cylindrical shape having a substantially circular cross section. In addition, the rotating shaft A develops along its own longitudinal direction substantially parallel to its own axis of revolution X2.

In the preferred field of application, the actuating device 1 can be coupled to a rotating shaft A of a motor transport vehicle, such as lorries, tractor-trailers, trucks, trains, cars and the like. It cannot, however, be ruled out that the rotating shaft A may be the wheel itself of the vehicle or a different type of rotating shaft A.

The device 1 according to the invention makes it possible to reduce the work of external forces required to vary the rotational speed of the rotating shaft A, such as e.g. the forces applied by the vehicle engine to accelerate or by the braking system to decelerate.

For this purpose, as will be described in detail later in this description, the actuating device 1 is configured to increase or decrease its own moment of inertia, and consequently of the rotating shaft A with which it is associated, as a function of the expected change in rotational speed.

This principle is derived from the rotational kinetic energy theorem and from the law of conservation of angular momentum. As is well known, the work of the momenta of the external forces applied to a rotating body makes it possible to vary its rotational kinetic energy. In the simplified case where the sum of the momenta of the external forces operating on the rotating body is zero, the angular momentum of the system is maintained. Since the angular momentum of a rotating body is directly proportional to the moment of inertia and the rotational speed of the body, varying the moment of inertia of a rotating body makes it possible to vary the angular speed with which it rotates accordingly. Since, moreover, the moment of inertia of a rotating body depends primarily on the distribution of its mass with respect to the axis of rotation, by appropriately changing the distribution of the mass around the axis of rotation it is possible to directly influence the speed of rotation, thereby reducing the work of the forces required to effect a given change in rotational speed.

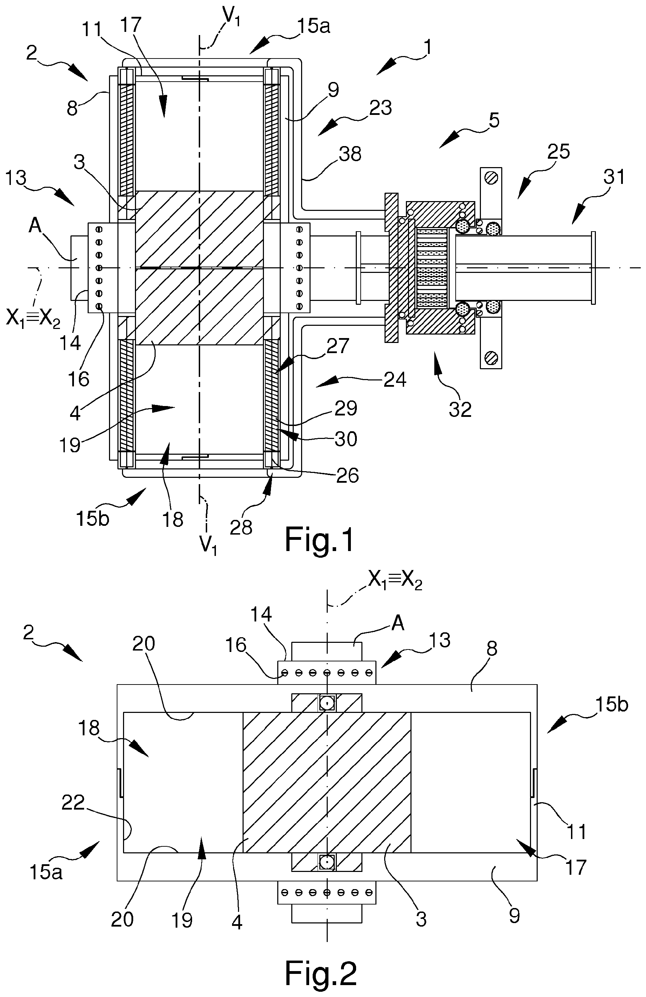

As shown in Figure 1, the actuating device 1 comprises a rotor body 2 adapted to rotate around its own axis of rotation X1. The rotor body 2 is configured to be locked together with a rotating shaft A. Specifically, the rotor body 2 is adapted to be connected to the rotating shaft A to rotate locked together with the latter. It cannot, however, be ruled out that the rotor body 2 can be made in a single body piece with the rotating shaft A or that the rotating shaft A can itself operate as a rotor body 2.

Appropriately, as we shall see later in the description, the rotor body 2 is configured to be coupled to the rotating shaft A so that its axis of rotation X1 is substantially parallel to the axis of revolution X2 of the rotating shaft A. In the present case, in use, the axis of rotation X1 of the rotor body 2 substantially coincides with the axis of revolution X2 of the rotating shaft A. Advantageously, the actuating device 1 comprises at least a first mass 3 and a second mass 4. Each mass 3, 4 is constrained to the rotor body 2 to move along its own direction of movement V1 transverse to the axis of rotation X1. In actual facts, each mass 3, 4 is coupled to the rotor body 2 in a sliding manner along a substantially radial direction of movement V1 with respect to the axis of rotation X1. In other words, each mass 3, 4 is movable away from and close to the axis of rotation X1 of the rotor body 2.

Additionally, each mass 3, 4 is coupled to the rotor body 2 locked together with respect to the rotation around the axis of rotation X1. In this case, each mass 3, 4 is coupled to the rotor body 2 to rotate locked together with the latter. Advantageously, the actuating device 1 is provided with movement means 5 operatively connected to each of the masses 3, 4 and adapted to move each of the masses 3, 4 along its own direction of movement V1 to vary the moment of inertia of the rotor body 2. Consequently, as specified above, by varying the moment of inertia of the rotor body 2, it is possible to vary that of the rotating shaft A.

In the case, for example, of applying the actuating device 1 to a motor vehicle, it often happens that the vehicle performs a series of maneuvers that require a deceleration phase, to slow down or brake the vehicle, followed by an acceleration phase to bring the vehicle back to the desired speed of movement. By means of the actuating device 1, it is possible to increase the moment of inertia of the rotor body 2 during the deceleration phase and decrease it during the acceleration phase, allowing the work exerted by the braking system and the engine to be reduced.

As anticipated above, each mass 3, 4 is movable close to and away from with respect to the axis of rotation X1. Specifically, each mass 3, 4 is movable between an approached limit position, wherein it is arranged in the proximity of a reference point, and a receding limit position wherein it is moved away from the reference point with respect to the approached limit position. Preferably, the reference point is the same for both masses 3, 4.

Preferably, the reference point lies substantially on the axis of rotation X1. It cannot, however, be ruled out that the actuating device 1 can be configured to displace the reference point with respect to the axis of rotation X1 to counterbalance any eccentricity or misalignment problems of the rotor body 2 and/or of the rotating shaft A.

Appropriately, the movement means 5 are configured to move the masses 3, 4 between a closing configuration, wherein both masses 3, 4 are arranged in the approached limit position, and an opening configuration wherein both masses 3, 4 are arranged in the receding limit position. As can be guessed, the rotor body 2 has a higher moment of inertia when the masses 3, 4 are in the opening configuration than when the masses 3, 4 are in the closing configuration. As a result, by moving the masses 3, 4 between the closing configuration and the opening configuration it is possible to decelerate the rotating shaft A, while moving the masses 3, 4 between the opening configuration and the closing configuration it is possible to accelerate the rotating shaft A.

The arrangement of the masses 3, 4, their conformation and weight is such that, at least in the closing configuration and in the opening configuration, the center of gravity of the rotor body 2 lies at the reference point, that is, at the axis of rotation X1 of the rotor body 2.

For this purpose, as we shall see in the following description, the masses 3, 4 are substantially similar to each other. In other words, the masses 3, 4 have a substantially similar weight. Moreover, this weight is distributed in a substantially complementary manner.

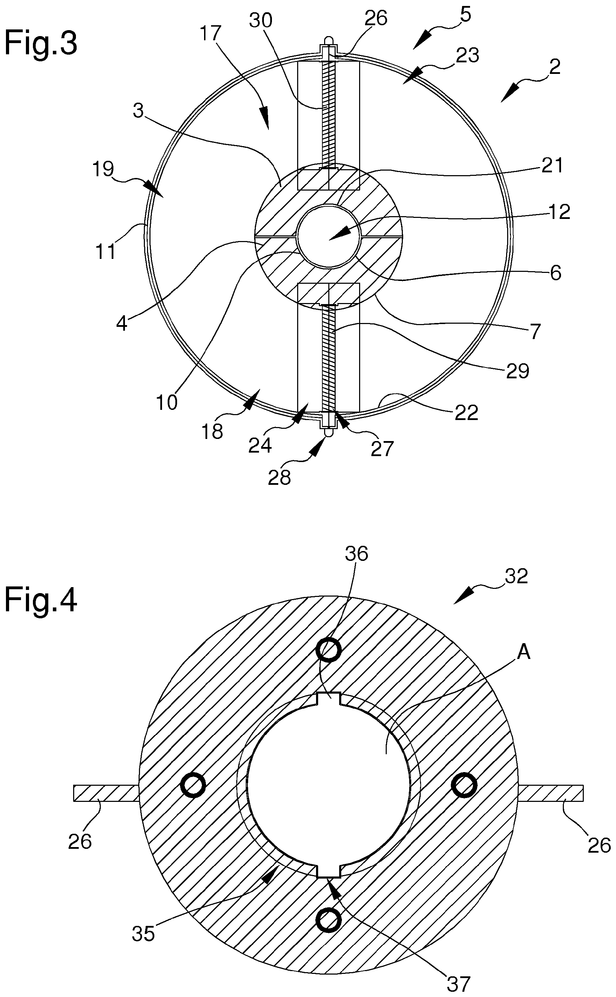

As shown in Figure 3, the masses 3, 4 are arranged opposite each other with respect to the axis of rotation X1. Specifically, the masses 3, 4 are set opposite each other in a mirroring manner with respect to the axis of rotation X1. In the present case, the masses 3, 4 are substantially aligned with each other along a direction transverse to the axis of rotation X1. In other words, the directions of movement V1 of the masses 3, 4 are substantially parallel to each other. In actual facts, the centers of gravity of the masses 3, 4 are arranged with each other at an angular distance of about 180°.

It cannot, however, be ruled out that the actuating device 1 may comprise a larger number of masses 3, 4 arranged appropriately around the axis of rotation so that the overall center of gravity is arranged substantially at the reference point, i.e., the axis of rotation X1. For example, in the case wherein the actuating device 1 comprises four masses, the masses are arranged with each other at an angular distance of about 90°. In general, the masses are arranged with each other at an angular distance which depends on the number of masses. In actual facts, the angular distance between the center of gravity of two consecutive masses is equal to about 360° divided by the number of masses.

It cannot also be ruled out that the masses 3, 4 could be different from each other and that the weight, shape and positioning thereof are selected such that it is possible to keep the rotor body 2 balanced.

Finally, it cannot be ruled out that the masses 3, 4 may be portions of a single mass which are movable with each other.

Appropriately, the movement means 5 are configured to move the masses 3, 4 between the limit positions in phase relationship. Specifically, the movement means 5 are configured to move the masses 3, 4 between the limit positions in a synchronized manner with each other. In other words, the movement means 5 are configured to move the masses 3, 4 while maintaining a respective distance from the reference point that is substantially similar.

It cannot, however, be ruled out that the movement means 5 can be configured to move the masses 3, 4 according to a specific phase relationship which allows generating inertial forces or keeping the center of gravity centered at a given reference point.

As anticipated above, the actuating device 1 can be configured to arrange the misaligned reference point with respect to the axis of rotation X1 in order to balance any imperfections identified in the rotating shaft A or in the rotor body 2. Such a displacement of the reference point can be accomplished by displacing the positioning of the limit positions of the masses 3, 4, for example, by appropriately setting the movement means 5 or by the use of movable limit switches.

Advantageously, the actuating device 1 comprises a control unit, not shown in the figures, operatively connected to the movement means 5 to control the operation thereof.

The control unit is configured to operate in:
- a deceleration condition wherein it controls the movement means to move the masses 3, 4 from the closing configuration to the opening configuration, and
- an acceleration condition wherein it controls the movement means to move the masses 3, 4 from the opening configuration to the closing configuration.

In the deceleration condition, the moment of inertia of the rotor body 2 increases in order to operate on the rotating shaft A to decrease the rotational speed thereof.

In the acceleration condition, on the other hand, the moment of inertia of the rotor body 2 decreases in order to operate on the rotating shaft A to increase the rotational speed thereof.

Appropriately, the control unit is configured to control the movement means in order to move the masses 3, 4 between the closing configuration and the opening configuration, and/or vice versa, with a predetermined speed. This speed may depend, e..g., on the deceleration or acceleration of the vehicle on which the device 1 is installed.

Preferably, the control unit is provided with an accelerometer configured to detect whether the transport vehicle on which the device is mounted is accelerating or decelerating and according to this detection to operate in acceleration or deceleration configuration. It cannot, however, be ruled out that the control unit may be without an accelerometer.

In addition, preferably, the control unit is configured to be connected to the vehicle's central control station.

Preferably, the control unit is of the type of an electronic control device, such as e.g. a PLC, microcontroller, electronic control unit, microprocessor, PC and/or the like.

Preferably, the control unit is operatively connected to the movement means 5 via a wired cable, pilot cable, wireless, Bluetooth, infrared and/or similar connection.

As visible from Figure 3, the masses 3, 4 are provided with a shape such that as a whole, at least in the approached configuration, they have a shape having symmetry by rotation.

In the embodiment shown in the figures, the masses 3, 4 as a whole have, in the approached configuration, a substantially ring shape. In the present case, each mass 3, 4 has a substantially arched ring shape. In the present case, each mass 3, 4 has a half-ring shape. In particular, each mass 3, 4 has a substantially concentric lower arc 6 and upper arc 7. In particular, the lower arc 6 faces the axis of rotation X1, while the upper arc 7 is opposite the lower arc 6.

In the remainder of this description and in the subsequent claims, the terms "lower" and "upper" are intended to denote the relative positioning of two or more elements with respect to the axis of rotation X1 along a substantially radial direction. In actual facts, a first element is arranged inferiorly to a second element if the first element is moved closer to the axis of rotation X1 than the second element.

Appropriately, the lower arc 6 has a radius substantially complementary to or greater than the radius of the rotating shaft A with which it is to be associated. Preferably, each mass 3, 4 is made of lead.

Preferably, each mass 3, 4 has a weight of between 50 kg and 300 kg, even more preferably of between 100 kg and 200 kg, better still 140 kg.

As anticipated above, the rotor body 2 is coupled to the rotating shaft A to rotate locked together with the latter.

As visible from Figure 1, preferably, the rotor body 2 is configured to fit the rotating shaft A. For this purpose, the rotor body 2 has a substantially central through-hole 12 adapted to receive the rotating shaft A. However, embodiments cannot be ruled out wherein the rotor body 2 is configured to be associated with an end portion of the rotating shaft A or to be interposed between two portions of the rotating shaft A.

Appropriately, the rotor body 2 has a shape substantially like a solid of revolution. In actual facts, in cross-section, the rotor body 2 has a substantially circular shape having the axis of rotation X1 as its center. This expedient allows the center of gravity of the rotor body 2 to be centered substantially on its axis of rotation X1 so that it can, in turn, be centered on the axis of revolution X2 of the rotating shaft A.

Preferably, the rotor body 2 has a substantially cylindrical shape. Appropriately, the rotor body 2 extends along its own longitudinal direction between a pair of side walls 8, 9. The longitudinal direction of the rotor body 2 is substantially parallel to its axis of rotation X1.

In addition, the rotor body 2 extends between a lower wall 10 and an upper wall 11 in a radial pattern.

The side walls 8, 9 are arranged substantially transverse to the axis of rotation X1. In actual facts, the side walls 8, 9 are arranged substantially parallel to the direction of movement of the masses 3, 4. In addition, the side walls 8, 9 are arranged substantially parallel to each other.

On the other hand, the upper wall 11 and the lower wall 10 have a substantially cylindrical shape. In other words, the lower wall 10 and the upper wall 11 have, in cross section, a substantially circular shape. In addition, the lower wall 10 and the upper wall 11 are substantially concentric. The lower wall 10 marginally borders the through-hole 12, while the upper wall 11 surrounds the lower wall 10.

Appropriately, as we shall see later in the description, the rotor body 2 is hollow on the inside in order to house the masses 3, 4.

Conveniently, the actuating device 1 comprises connecting means 13 configured to connect the rotor body 2 locked together with the rotating shaft A. Preferably, the connecting means 13 are of the type of a rigid coupling. Even more preferably, the connecting means 13 comprise a connecting flange 14. Appropriately, the rotor body 2 has a coupling system to the rotating shaft A of the type of a shell-shaped coupling which allows promoting the application of the actuating device 1 to a rotating shaft A. In actual facts, the rotor body 2 comprises at least one pair of shells 15a, 15b coupleable to each other. The shells 15a, 15b are positionable to embrace the rotating shaft A and are adapted to connect to each other to attach the rotor body 2 locked together with the rotating shaft A. For this purpose, the rotor body 2 has locking means 16 associable with the two shells 15a, 15b to connect them together. In particular, the locking means 16 are configured to tighten the shells 15a, 15b in order to secure them substantially locked together with the rotating shaft A. Preferably, the locking means 16 are of the type of one or more through-bolts. Other types of locking means cannot however be ruled out, such as e.g. the use of an interlocking system or locking members.

As visible from Figure 3, each shell 15a, 15b has, in cross section, a substantially semicircular shape. In particular, each shell 15a, 15b has, in cross section, a substantially "C" shape.

It cannot, however, be ruled out that the rotor body 2 can be made in one single body piece. In such a case, the coupling with the rotating shaft A can be made by fitting the latter directly into the through-hole 12.

As anticipated above, each mass 3, 4 is constrained to the rotor body 2 to move along the direction of movement V1 and to rotate locked together with the rotor body 2.

As visible in Figure 1, the rotor body 2 comprises at least a first housing 17 configured to house the first mass 3 and at least a second housing 18 configured to house the second mass 4.

For this purpose, the rotor body 2 has an internal cavity 19 which defines the first housing and the second housing 17, 18. This arrangement makes it possible to protect the masses 2, 3 and any elements of the movement means from possible destructive contact with debris or other vehicle elements.

Appropriately, in longitudinal cross section, each mass 3, 4 has a length which is substantially complementary to the length of the respective housing 17, 18, or the internal cavity 19, so that it is fitted flush in the latter, thus avoiding unwanted movement.

The term "length" in reference to the masses and housing means their dimension parallel to the direction of longitudinal development of the rotor body 2, i.e., the axis of rotation X1.

In the present case, each housing 17, 18 is bounded laterally by two abutment surfaces 20 opposite each other. The abutment surfaces 20 are arranged substantially parallel to the direction of movement V1. Preferably, the abutment surfaces 20 are arranged on the side walls 8, 9 of the rotor body 2.

In addition, each housing 17, 18 is bounded inferiorly and superiorly by a lower end-of stroke surface 21 and an upper end-of stroke surface 22 respectively, which are opposite each other along the direction of movement V1 of the masses 3, 4.

Specifically, the end-of stroke surfaces 21, 22 are configured to abut against the respective mass 3, 4 to arrange it in the limit positions. In this case, the lower end-of stroke surface 21 abuts against the respective mass 3, 4 to arrange it in the approached limit position, while the upper end-of stroke surface 22 abuts against the respective mass 3, 4 to arrange it in the receding limit position. Preferably, the lower and upper end-of stroke surfaces 21, 22 are arranged on the lower wall 10 and on the upper wall 11 of the rotor body 2, respectively.

As visible from Figure 2, each housing 17, 18 is made on one of the shells 15a, 15b.

As anticipated above, each mass 3, 4 is constrained to the rotor body 2 in order to be moved along its own direction of movement V1. Specifically, each mass 3, 4 is constrained to the rotor body 2 by means of a respective constraint system, not shown in the figures, which allows the motion of the mass 3, 4 along the direction of movement V1. Specifically, each constraining system comprises a guide arranged on the rotor body 2 which extends substantially parallel to the direction of movement V1 and an engagement element, arranged on the respective mass 3, 4, configured to engage in a sliding manner to the guide in order to slide along the latter.

The guide is arranged where one of the side walls 8, 9 of the rotor body 2 is located.

The engagement element has a cross section with a shape substantially complementary to the cross section of the guide so that it can be fitted flush into the latter.

Preferably, the guide, in cross section, has a substantially rectangular or square shape. Accordingly, the engagement element also has a cross section of substantially rectangular or square shape. Such a conformation of the coupling allows the mass 3, 4 to be constrained only to the shift motion along the direction of movement V1, thus avoiding possible unwanted rotation.

In the present case, the rotor body 2 comprises a groove that defines the guide.

In one embodiment, the rotor body 2 has a pair of guides opposite each other, and the mass 3, 4 has a pair of engagement elements each insertable into one of the guides. Preferably, one of the guides is arranged on one side wall 8, 9, while the other of the guides is arranged on the other side wall 8, 9.

The size and weight of the rotor body 2 and of the masses 3, 4 are designed and proportioned according to their use and the type of vehicle on which the device 1 is to be mounted. In the first instance, the size mainly depends on the diameter of the rotating shaft A.

Take, for example, the case where the rotating shaft A has a diameter of between 120 mm and 200 mm, preferably 150 mm.

In such an example, the rotor body 2 is designed with a diameter of between 700 mm and 1100 mm, preferably 900 mm; a width of between 200 mm and 600 mm, preferably 420 mm.

In such a case, moreover, the masses 3, 4 can be moved by a stroke of between 200 mm and 400 mm, preferably about 260 mm.

In addition, the masses 3, 4 have a length of 260 mm, a depth of 40 mm and a width of 150 mm.

Each mass 3, 4 has a lower arc 6 having a radius of between 120 mm and 200 mm, preferably about 150 mm.

Preferably, each mass 3, 4 has an upper arc 7 of radius of between 130 mm to 220 mm, preferably about 180 mm.

Instead, the guide has a rectangular geometry of about 50x40x150 mm.

It goes without saying that the dimensions can easily be adjusted by an expert in the field depending on the type of vehicle on which the device 1 is to be mounted and depending on the desired change in the moment of inertia.

Advantageously, the movement means 5 comprise a first transmission system 23 operatively connected to the first mass 3 and configured to move it along the respective direction of movement V1. In addition, the movement means 5 comprise a second transmission system 24 operatively connected to the second mass 4 and configured to move it along the respective direction of movement V1.

Additionally, the movement means 5 comprise at least one actuator 25 operatively connected to the transmission systems 23, 24 to operate them in order to move the masses 3, 4 along their own directions of movement V1. Usefully, the actuator 25 is configured to simultaneously operate both transmission systems 23, 24 in order to move the masses 3, 4 simultaneously, preferably in a synchronized manner.

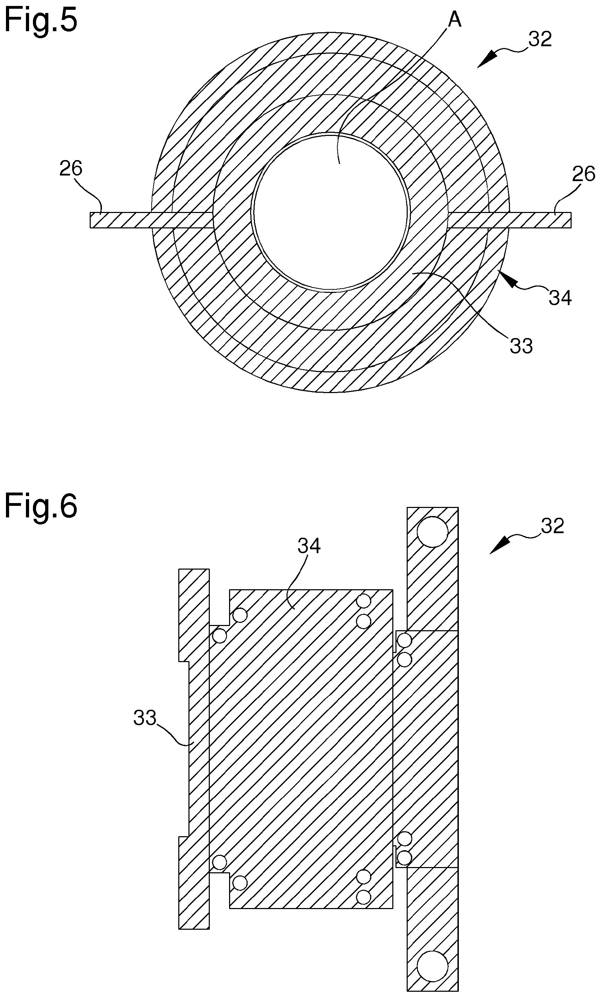

According to one embodiment shown in Figures 1, 6, each transmission system 23, 24 comprises at least one tie rod 26 positioned between the actuator 25 and the respective mass 3, 4. The actuator 25 is configured to exert a force on the tie rod 26 in order to move the mass 3, 4 along the direction of movement V1 following a first direction. In actual facts, the actuator 25 is configured to exert a predetermined driving force on the tie rod 26 along a direction of actuation such that the mass 3, 4 is set in motion along the direction of movement in the first direction.

Additionally, each transmission system 23, 24 comprises a spring return element 27 positioned between the rotor body 2 and the respective mass 3, 4.

The spring return element 27 is configured to elastically oppose the movement of the mass 3, 4 along the first direction in order to exert a spring return force capable of moving the mass 3, 4 following a second direction opposite the first direction. In brief, by means of the tie rod 26 it is possible to move the mass 3, 4 in a first direction, consequently loading the spring return element 27. Subsequently, the actuator 25 can reduce or cancel the force applied to the tie rod 26 so that the spring return element 27 can operate on the mass 3, 4 to move it in the second direction. In actual facts, the tie rod 26 and the spring return element 27 are configured to operate in conjunction with each other and with the actuator 25 in order to move the respective mass 3, 4 along the direction of movement V1 following the first and second directions.

Appropriately, the first direction is from the approached limit position towards the receding limit position. The second direction, accordingly, is from the receding limit position towards the approached limit position. This expedient ensures that, in the event of an actuator failure, the masses 3, 4 are maintained by the spring return element 27 in the approached configuration in order to keep the actuating device 1 in the condition of the lowest possible moment of inertia. As shown in Figure 3, the tie rod 26 is anchored to the respective mass 3, 4. Specifically, the tie rod 26 is attached at one end to the respective mass 3, 4. In this case, the mass 3, 4 comprises a receiving hole where the end of the tie rod is fitted to attach.

In addition, the rotor body 2 comprises a hole 28 cut at the upper wall 11 adapted to allow the passage of the tie rod 26 from the mass 3, 4 to the actuator 25.

Preferably, the tie rod 26 comprises attachment means arranged at its connecting end and configured to attach to the respective mass 3, 4.

Preferably, the tie rod 26 is of the type of a rope.

As can be seen from Figure 3, the spring return element 27 is arranged between the rotor body 2 and the mass 3, 4. Specifically, the spring return element 27 is positioned between the upper wall 11 of the rotor body 2 and the mass 3, 4. Thus, when the mass 3, 4 is moved in the first direction, the spring return element 27 is compressed, loading itself elastically.

For this purpose, the mass 3, 4 comprises a seat adapted to house one end of the spring return element 27. Preferably, the seat is a recess formed on the mass 3, 4. Even more preferably, the seat is arranged where the receiving hole of the tie rod 26 is located. In addition, the spring return element 27 is connected to another end thereof locked together with the upper wall of the rotor body 2.

Appropriately, the spring return element 27 comprises a compression spring 29. The compression spring 29 extends along its own longitudinal direction substantially parallel to the direction of movement.

The compression spring 29 bounds a passage space 30 within itself. In actual facts, the compression spring 29 wraps around in a spiral pattern by bounding a passage space 30.

Usefully, the tie rod 26 is arranged at least partly in the passage space 30 of the compression spring 29 so that the latter can operate as a guide for the tie rod 26. Preferably, the compression spring 29 has, in one cross section thereof, a substantially circular shape. Preferably, the spring has a diameter of 30 mm.

In one or more embodiments, each transmission system 23, 24 comprises a pair of tie rods 26 and a pair of spring return elements 27, each tie rod 26 being configured to operate in conjunction with one of the spring return elements 27 in the manner described above.

As shown in Figure 1, the actuator 25 is arranged externally to the rotor body 2. Specifically, the actuator 25 is adapted to be associated with the rotating shaft A.

Suitably, the actuator 25 comprises a piston element 31 connected to the tie rods 26 and movable at least partly along a direction of actuation to exert a tensile force on the tie rods in order to move the masses 3, 4 along the direction of movement V1. Specifically, the piston element 31 comprises a fixed portion and a movable portion coupled to the fixed portion in a sliding manner to slide along the direction of actuation. The movable portion is connected to the tie rods 26 to apply a tensile force thereto.

As described in detail in the following description, the piston element 31 is positioned, in use, substantially parallel to the rotating shaft A. Therefore, the direction of actuation is preferably substantially parallel to the axis of revolution X2 of the rotating shaft A. The fixed portion is adapted to be connected to a supporting frame, such as e.g. to the vehicle chassis, to hold the piston element 31 in a substantially fixed position.

The actuator 25 is also provided with a driving system operatively connected to the piston element 31 to move it along the direction of actuation.

Appropriately, the actuating device 1 comprises at least one bearing element 32 positioned between the tie rods 26 and the actuator 25. In addition, the bearing element 32 is configured to be arranged between the rotating shaft A and the piston element 31 in order to hold the latter.

The bearing element 32 is configured to associate the piston element 31 with the rotating shaft A, allowing the latter to rotate freely with respect to the piston element 31.

In addition, the bearing element 32 is connected to the tie rods 26 to enable it to rotate together with the rotating shaft A so as to prevent any possible entanglement.

Finally, the bearing element 32 is configured to allow the movement of the piston element 31 along the direction of actuation and to transfer such a motion to the tie rods 26.

For this purpose, conveniently, the bearing element 32 comprises a primary crown gear 33 and a secondary crown gear 34 surrounding the primary crown gear 33. The primary crown gear 33 and the secondary crown gear 34 being coupled to rotate independently of each other. In actual facts, the primary crown gear 33 and the secondary crown gear 34 are cylindrical elements substantially coaxial with each other.

To enable the independent rotation between the two crown gears 33, 34, the bearing element 32 comprises one or more rotating elements, such as e.g. marbles or small cylinders or balls, located between the primary crown gear 33 and the secondary crown gear 34.

The secondary crown gear 34 is connected to the piston element 31, while the primary crown gear 33 can be coupled locked together with the rotating shaft A so that the latter can rotate independently of the piston element 31. Appropriately, the primary crown gear 33 is connected to the tie rods 26 so that the latter rotate together with the rotating shaft A and with the rotor body 2, preventing any entanglement from forming.

Advantageously, the bearing element 32 is adapted to be associated with the rotating shaft A in a sliding manner along a direction substantially parallel to the direction of actuation, that is, along a direction substantially parallel to the axis of revolution X2.

For this purpose, the actuating device 1 comprises a keyed constraint system 35 adapted to be arranged between the primary crown gear 33 of the bearing element and the rotating shaft A. Specifically, the keyed constraint system 35 comprises:
- a key element 36 arranged, in use, on one of either the primary crown gear 33 or the rotating shaft A, and
- a seat 37 coupled to the key element 36 in a sliding manner and arranged, in use, on the other of either the primary crown gear 33 or the rotating shaft A.

The key element 36 has a longitudinal extension, meant as a dimension parallel to the direction of actuation, such that the bearing element 32 can slide along it by a distance substantially similar to the travel of the masses 3, 4.

Preferably, the seat 37 is obtained on the primary crown gear 33 and the key element 36 is arranged on the rotating shaft A. This expedient facilitates the maintenance and replacement operations of the bearing element in case of failure.

Appropriately, the actuating device 1 comprises at least one sheath 38 adapted to cover a tie rod 26 to protect it. The sheath 38 extends by substantially the entire path of the tie rod 26 from the rotor body to the piston element 31. In addition, the sheath 38 is adapted to anchor the tie rod 26 to the rotor body 2 and to the rotating shaft A to prevent any entanglement during use.

Preferably, the actuating device 1 comprises one sheath for each tie rod 26.

According to one embodiment, the movement means 5 are of the type of an electromagnetic actuator configured to generate a magnetic or electromagnetic actuating force on each mass 3, 4 to move it along its direction of movement V1, according to the first and second directions.

In the present case, in this embodiment, each transmission system 23, 24 comprises at least one magnetic element associated with the respective mass 3, 4. Preferably, the magnetic element is the mass 3, 4 itself. For this purpose, each mass 3, 4 is made at least partly of a ferromagnetic material.

Each transmission system 23, 24 then comprises an electromagnet associated with the rotor body 2 and configured to generate, as a result of the passage of an electric current through it, a magnetic field such that it interacts with the magnetic element in order to generate a force capable of moving the mass 3, 4 along the direction of movement V1. Specifically, depending on the direction of the current flowing within the electromagnet, the latter is configured to move the mass 3, 4 along the direction of movement V1 according to one direction or the other.

In this embodiment, the actuator 25 comprises an electric generator operatively connected to the electromagnet and configured to supply the latter with electric current.

The electric generator is configured to provide positive and negative electric current in order to generate direct forces in the two directions depending on whether the mass 3, 4 is to be moved from the approached limit position to the receding limit position or vice versa.

The electromagnetic actuator can be of the solenoid or linear type.

Preferably, each transmission system 23, 24 has a pair of electromagnets associated with the rotor body 2 in opposite positions to each other with respect to the direction of movement V1. Specifically, one electromagnet is arranged inferiorly to the respective mass 3, 4, while the other electromagnet is arranged superiorly to the respective mass 3, 4. In the present case, one electromagnet is arranged on the lower wall 10 and the other electromagnet is arranged on the upper wall 11. The electric generator is operatively connected to each electromagnet to supply it with an electric current. Specifically, the electromagnets are alternately activated in order to move the mass 3, 4 along the direction of movement in the first direction and in the second direction. Appropriately, the movement means 5 comprise a safety system configured to place each mass 3, 4 in the approached limit position when an error occurs in the operation of the device 1.

This invention also relates to a motor transport vehicle provided with a rotating shaft A holding at least one wheel and an actuating device 1 associated with the rotating shaft A in accordance with the foregoing.

In this case, the transport vehicle comprises at least one motorized rotating shaft and one driven rotating shaft. Each rotating shaft is adapted to hold at least one wheel. In the present case, each rotating shaft is associated with a pair of wheels.

The vehicle is also provided with a motor operatively connected to the motorized rotating shaft and configured to generate a driving force so as to rotate the motorized rotating shaft.

Preferably, the engine is a heat engine. Even more preferably, the vehicle has wheels with a diameter of about 1000 mm and a rotating shaft A with a diameter of about 150mm.

Usefully, the actuating device 1 is applied to the driven rotating shaft in such a way that it does not directly affect the operation of the motor.

Appropriately, the vehicle comprises a central checking station configured to generate a signal indicating that the vehicle is performing deceleration or acceleration. The control unit of the actuating device 1 is operatively connected to the central checking station to receive such signal in order to operate in an acceleration or deceleration condition according to the received signal.

In this case, in the event of the central checking station communicating that the vehicle is performing deceleration, the control unit operates in the deceleration condition. Similarly, in the event of the central checking station communicating that the vehicle is performing acceleration, the control unit operates in the acceleration condition.

Preferably, the control unit is operatively connectable to the central checking station via a wired cable, pilot cable, wireless, Bluetooth, infrared and/or similar connection.

The operation of this actuating device 1 in carrying out the process according to the invention is as follows.

Appropriately, the actuating device 1 is applied to a rotating shaft of a transport vehicle. Specifically, the actuating device 1 is applied to a driven rotating shaft of the transport vehicle. By driven rotating shaft is meant a rotating shaft of the vehicle on which the engine does not operate directly. In actual facts, the driven rotating shaft is different from the drive shaft on which, on the other hand, the engine operates by means of a transmission system. It cannot, however, be ruled out that the device 1 can be applied to the drive shaft.

To better manage speed control, the control unit is connected to the vehicle central checking station.

During standard vehicle operation, there may be a deceleration phase, wherein the vehicle slows down its travel speed, and/or an acceleration phase wherein the vehicle increases its travel speed.

The preferred condition wherein the device 1 works best involves the vehicle performing a deceleration phase followed by an acceleration phase.

Before the occurrence of these two phases, the actuating device 1 is arranged in an initialization configuration wherein the masses are arranged in a closing configuration.

During the deceleration phase, the control unit is configured to operate in the deceleration condition. In this case, the movement means 5 move the masses 3, 4 from the closing configuration to the opening configuration. In actual facts, the masses 3, 4 are moved away from each other and from the axis of rotation X1 to increase the moment of inertia of the rotor body 2.

During the acceleration phase, on the other hand, the control unit is configured to operate in the acceleration condition. In this case, the movement means 5 move the masses 3, 4 from the opening configuration to the closing configuration. In actual facts, the masses 3, 4 are moved close to each other and to the axis of rotation X1 to decrease the moment of inertia of the rotor body 2. The Applicants carried out several tests aimed at determining the performance of the device 1 according to the invention.

In a first test, the device 1 was associated with a rotating shaft connected to a pair of wheels. The device was operated in the deceleration condition.

The rotating shaft and the pair of wheels used in the first test had the following characteristics:
- 1 m wheel diameter,
- 0.077 m radius of the rotating shaft,
- 260 mm opening stroke of the device,
- 0.177 m radius of the device in the closing configuration (meant as the distance between the axis of rotation and the center of gravity of one of the masses),
- 0.387 m radius of the device in the opening configuration (meant as the distance between the axis of rotation and the center of gravity of one of the masses),
- 16.7 rad/s wheel angular velocity,
- 3 s displacement time of the device 1 from the closing configuration to the opening configuration.

During such test, the device 1 has been activated to operate it in the deceleration condition. After the device 1 has been reached the opening configuration, it has been ascertained that the wheels decreased their rotational speed reaching a final angular speed of 4.2 rad/s.

A second test, on the other hand, was carried out with the same rotating shaft and the same pair of wheels as in the first test, but making the pair of wheels rotate at a speed of 50 rad/s.

In that test, after the device 1 has reached the opening configuration, it has been ascertained that the wheels decreased their rotational speed reaching a final angular speed of 6.4 rad/s.

It has in practice been ascertained that the described invention achieves the intended objects, and in particular, the fact is emphasized that by means of the actuating device it is possible to reduce the energy consumption of a transport vehicle and thus the emission of CO2 and other pollutants into the air, as well as to drastically decrease the wear and tear of the braking system.

## Claims

1. Actuating device (1) which can be coupled to a rotating shaft, preferably of a motor transport vehicle, for the reduction of energy consumption, comprising:
- a rotor body (2) adapted to rotate around its own axis of rotation (X1), said rotor body (2) being configured to be locked together with a rotating shaft (A);
- at least a first mass (3) and a second mass (4), each constrained to said rotor body (2) to move along a direction of movement (V1) transverse to said axis of rotation (X1); **Characterized in that** it comprises
- movement means (5) operatively connected to each of said masses (3, 4) and adapted to move each of said masses (3, 4) along said direction of movement (V1) to vary the moment of inertia of said rotor body (2) in order to vary the angular speed of said rotating shaft (A).

2. Actuating device (1) according to claim 1, wherein each of said masses (3, 4) are movable between an approached limit position wherein it is arranged in the proximity of said axis of rotation (X1) and a receding limit position wherein it is moved away from said axis of rotation.

3. Actuating device (1) according to the preceding claim, wherein said movement means (5) are configured to move said masses (3, 4) between a closed configuration, wherein both masses (3, 4) are in the approached limit position, and an open configuration, wherein both masses (3, 4) are in the receding limit position.

4. Actuating device (1) according to the preceding claim, comprising a control unit operatively connected to said movement means (5) to control the operation thereof, said control unit being configured to operate in:
- a deceleration condition wherein it controls said movement means to move said masses (3, 4) from said closing configuration to said opening configuration, and
- an acceleration condition wherein it controls said movement means to move said masses (3, 4) from said opening configuration to said closing configuration.

5. Actuating device (1) according to one or more of the preceding claims, **characterized by** the fact that said rotor body (2) comprises at least one internal cavity (19) defining a first housing (17) adapted to house said first mass (3) and a second housing (18) adapted to house said second mass (4).

6. Actuating device (1) according to one or more of the preceding claims, wherein said movement means (5) comprise:
- a first transmission system (23) operatively connected to said first mass (3) to move it along said respective direction of movement,
- a second transmission system (24) operatively connected to said second mass (4) to move it along said respective direction of movement, and
- an actuator (25) operatively connected to said transmission systems (23, 24) to operate them simultaneously.

7. Actuating device (1) according to one or more of the preceding claims, each of said transmission systems (23, 24) comprise:
- at least one tie rod (26) positioned between said actuator (25) and said respective mass (3, 4), and
- a spring return element (27) positioned between said rotor body (2) and said respective mass (3, 4),
wherein:
- said actuator (25) is configured to exert a force on said tie rod (26) in order to move said respective mass (3, 4) along said direction of movement (V1) in a first direction, and
- said spring return element (27) is configured to elastically oppose the movement of said mass (3, 4) along said first direction in order to exert a spring return force capable of moving said mass (3, 4) along a second direction opposite the first direction.

8. Actuating device (1) according to one or more of the preceding claims, wherein each of said transmission systems (23, 24) comprises:
- at least one magnetic element associated with said respective mass (3, 4), and
- an electromagnet associated with said rotor body (2) and configured to generate, as a result of the passage through it of an electric current, a magnetic field such that it interacts with said magnetic element to generate a force capable of moving said mass (3, 4) along said direction of movement (V1).

9. Motor transport vehicle, comprising:
- at least one rotating shaft (A) supporting at least one wheel,
- an actuating device (1) according to one or more of the preceding claims, associated with said rotating shaft (A).

10. Using method of an actuating device, comprising the phases of:
- having an actuating device (1) according to one or more of claims 2 to 8,
- applying said actuating device (1) to a rotating shaft (A) of a motor transport vehicle,
- during a deceleration phase of said motor transport vehicle, moving said masses (3, 4) from said approached limit position towards said receding limit position,
- during an acceleration phase of said motor transport vehicle, moving said masses (3, 4) from said receding limit position to said approached limit position.

## Patentansprüche

1. Betätigungsvorrichtung (1), die mit einer rotierenden Welle, vorzugsweise eines Transport-Kraftfahrzeugs, gekoppelt werden kann, um den Energieverbrauch zu reduzieren, umfassend:
- einen Rotorkörper (2), der ausgelegt ist, sich um seine eigene Drehachse (X1) zu drehen, wobei der Rotorkörper (2) ausgebildet ist, mit einer rotierenden Welle (A) verriegelt zu werden;
- mindestens eine erste Masse (3) und eine zweite Masse (4), die jeweils an dem Rotorkörper (2) befestigt sind, um sich entlang einer Bewegungsrichtung (V1) quer zu der Drehachse (X1) zu bewegen;
**dadurch gekennzeichnet, dass** sie umfasst
- Bewegungsmittel (5), die mit jeder der Massen (3, 4) wirkverbunden und ausgelegt sind, jede der Massen (3, 4) entlang der Bewegungsrichtung (V1) zu bewegen, um das Trägheitsmoment des Rotorkörpers (2) zu verändern, um die Winkelgeschwindigkeit der rotierenden Welle (A) zu verändern.

2. Betätigungsvorrichtung (1) nach Anspruch 1, wobei jede der Massen (3, 4) zwischen einer angenäherten Endposition, in der sie in der Nähe der Drehachse (X1) angeordnet ist, und einer entfernten Endposition, in der sie von der Drehachse entfernt ist, bewegbar ist.

3. Betätigungsvorrichtung (1) nach dem vorhergehenden Anspruch, wobei die Bewegungsmittel (5) ausgebildet sind, die Massen (3, 4) zwischen einer geschlossenen Konfiguration, in der sich beide Massen (3, 4) in der angenäherten Endposition befinden, und einer offenen Konfiguration zu bewegen, in der sich beide Massen (3, 4) in der entfernten Endposition befinden.

4. Betätigungsvorrichtung (1) nach dem vorhergehenden Anspruch, umfassend eine Steuereinheit, die mit den Bewegungsmitteln (5) wirkverbunden ist, um deren Betrieb zu steuern, wobei die Steuereinheit ausgebildet ist, in folgenden Zuständen zu arbeiten:
- einem Verzögerungszustand, in dem sie die Bewegungsmittel steuert, um die Massen (3, 4) aus der geschlossenen Konfiguration in die offene Konfiguration zu bewegen, und
- einem Beschleunigungszustand, in dem sie die Bewegungsmittel steuert, um die Massen (3, 4) aus der offenen Konfiguration in die geschlossene Konfiguration zu bewegen.

5. Betätigungsvorrichtung (1) nach einem oder mehreren der vorhergehenden Ansprüche, **dadurch gekennzeichnet, dass** der Rotorkörper (2) mindestens einen inneren Hohlraum (19) umfasst, der ein erstes Gehäuse (17) zur Aufnahme der ersten Masse (3) und ein zweites Gehäuse (18) zur Aufnahme der zweiten Masse (4) definiert.

6. Betätigungsvorrichtung (1) nach einem oder mehreren der vorhergehenden Ansprüche, wobei die Bewegungsmittel (5) umfassen:
- ein erstes Übertragungssystem (23), das mit der ersten Masse (3) wirkverbunden ist, um diese entlang der jeweiligen Bewegungsrichtung zu bewegen,
- ein zweites Übertragungssystem (24), das mit der zweiten Masse (4) wirkverbunden ist, um diese entlang der jeweiligen Bewegungsrichtung zu bewegen, und
- einen Aktuator (25), der mit den Übertragungssystemen (23, 24) wirkverbunden ist, um diese gleichzeitig zu betätigen.

7. Betätigungsvorrichtung (1) nach einem oder mehreren der vorhergehenden Ansprüche, wobei jedes der Übertragungssysteme (23, 24) umfasst:
- mindestens eine Verbindungsstange (26), die zwischen dem Aktuator (25) und der entsprechenden Masse (3, 4) angeordnet ist, und
- ein Federrückstellelement (27), das zwischen dem Rotorkörper (2) und der entsprechenden Masse (3, 4) angeordnet ist, wobei:
- der Aktuator (25) ausgebildet ist, eine Kraft auf die Verbindungsstange (26) auszuüben, um die entsprechende Masse (3, 4) entlang der Bewegungsrichtung (V1) in eine erste Richtung zu bewegen, und
- das Federrückstellelement (27) ausgebildet ist, der Bewegung der Masse (3, 4) in der ersten Richtung elastisch entgegenzuwirken, um eine Federrückstellkraft auszuüben, die in der Lage ist, die Masse (3, 4) in einer zweiten Richtung entgegen der ersten Richtung zu bewegen.

8. Betätigungsvorrichtung (1) nach einem oder mehreren der vorhergehenden Ansprüche, wobei jedes der Übertragungssysteme (23, 24) umfasst:
- mindestens ein Magnetelement, das der entsprechenden Masse (3, 4) zugeordnet ist, und
- einen Elektromagneten, der dem Rotorkörper (2) zugeordnet und ausgebildet ist, infolge des Durchflusses eines elektrischen Stroms durch ihn ein Magnetfeld zu erzeugen, das mit dem Magnetelement in Wechselwirkung tritt, um eine Kraft zu erzeugen, die in der Lage ist, die Masse (3, 4) entlang der Bewegungsrichtung (V1) zu bewegen.

9. Transport-Kraftfahrzeug, umfassend:
- mindestens eine rotierende Welle (A), die mindestens ein Rad trägt,
- eine Betätigungsvorrichtung (1) nach einem oder mehreren der vorhergehenden Ansprüche, die mit der rotierenden Welle (A) verbunden ist.

10. Verfahren zur Verwendung einer Betätigungsvorrichtung, umfassend die folgenden Phasen:
- Bereitstellen einer Betätigungsvorrichtung (1) nach einem oder mehreren der Ansprüche 2 bis 8,
- Anbringen der Betätigungsvorrichtung (1) an einer rotierenden Welle (A) eines Transport-Kraftfahrzeugs,
- während einer Verzögerungsphase des Transport-Kraftfahrzeugs Bewegen der Massen (3, 4) von der angenäherten Endposition in Richtung der entfernten Endposition,
- während einer Beschleunigungsphase des Transport-Kraftfahrzeugs Bewegen der Massen (3, 4) von der entfernten Endposition in Richtung der angenäherten Endposition.

## Revendications

1. - Dispositif d'actionnement (1) qui peut être couplé à un arbre rotatif, de préférence d'un véhicule de transport à moteur, pour la réduction de la consommation d'énergie, comprenant :
- un corps de rotor (2) apte à tourner autour de son propre axe de rotation (X1), ledit corps de rotor (2) étant configuré pour être verrouillé conjointement avec un arbre rotatif (A) ;
- au moins une première masse (3) et une seconde masse (4), chacune contrainte sur ledit corps de rotor (2) pour se déplacer le long d'une direction de déplacement (V1) transversale audit axe de rotation (X1) ; **caractérisé par le fait qu'**il comprend
- des moyens de déplacement (5) reliés fonctionnellement à chacune desdites masses (3, 4) et aptes à déplacer chacune desdites masses (3, 4) le long de ladite direction de déplacement (V1) pour faire varier le moment d'inertie dudit corps de rotor (2) afin de faire varier la vitesse angulaire dudit arbre rotatif (A).

2. - Dispositif d'actionnement (1) selon la revendication 1, dans lequel chacune desdites masses (3, 4) est déplaçable entre une position limite d'approche dans laquelle elle est disposée à proximité dudit axe de rotation (X1) et une position limite de recul dans laquelle elle est éloignée dudit axe de rotation.

3. - Dispositif d'actionnement (1) selon la revendication précédente, dans lequel lesdits moyens de déplacement (5) sont configurés pour déplacer lesdites masses (3, 4) entre une configuration fermée, dans laquelle les deux masses (3, 4) sont dans la position limite d'approche, et une configuration ouverte, dans laquelle les deux masses (3, 4) sont dans la position limite de recul.

4. - Dispositif d'actionnement (1) selon la revendication précédente, comprenant une unité de commande reliée de manière fonctionnelle auxdits moyens de déplacement (5) pour en commander le fonctionnement, ladite unité de commande étant configurée pour fonctionner dans :
- un état de décélération dans lequel elle commande lesdits moyens de déplacement pour déplacer lesdites masses (3, 4) de ladite configuration fermée à ladite configuration ouverte, et
- un état d'accélération dans lequel elle commande lesdits moyens de déplacement pour déplacer lesdites masses (3, 4) de ladite configuration ouverte à ladite configuration fermée.

5. - Dispositif d'actionnement (1) selon l'une ou plusieurs des revendications précédentes, **caractérisé par le fait que** ledit corps de rotor (2) comprend au moins une cavité interne (19) définissant un premier logement (17) apte à recevoir ladite première masse (3) et un second logement (18) apte à recevoir ladite seconde masse (4).

6. - Dispositif d'actionnement (1) selon l'une ou plusieurs des revendications précédentes, dans lequel lesdits moyens de déplacement (5) comprennent :
- un premier système de transmission (23) relié de manière fonctionnelle à ladite première masse (3) pour la déplacer le long de ladite direction de déplacement respective,
- un second système de transmission (24) relié de manière fonctionnelle à ladite seconde masse (4) pour la déplacer le long de ladite direction de déplacement respective, et
- un actionneur (25) relié de manière fonctionnelle auxdits systèmes de transmission (23, 24) pour les actionner simultanément.

7. - Dispositif d'actionnement (1) selon l'une ou plusieurs des revendications précédentes, chacun desdits systèmes de transmission (23, 24) comprenant :
- au moins une barre d'accouplement (26) positionnée entre ledit actionneur (25) et ladite masse respective (3, 4), et
- un élément de rappel à ressort (27) positionné entre ledit corps de rotor (2) et ladite masse respective (3, 4),
dans lequel :
- ledit actionneur (25) est configuré pour exercer une force sur ladite barre d'accouplement (26) afin de déplacer ladite masse respective (3, 4) le long de ladite direction de déplacement (V1) dans une première direction, et
- ledit élément de rappel à ressort (27) est configuré pour s'opposer élastiquement au déplacement de ladite masse (3, 4) le long de ladite première direction afin d'exercer une force de rappel par ressort capable de déplacer ladite masse (3, 4) le long d'une seconde direction opposée à la première direction.

8. - Dispositif d'actionnement (1) selon l'une ou plusieurs des revendications précédentes, dans lequel chacun desdits systèmes de transmission (23, 24) comprend :
- au moins un élément magnétique associé à ladite masse respective (3, 4), et
- un électroaimant associé audit corps de rotor (2) et configuré pour générer, comme suite au passage à travers lui d'un courant électrique, un champ magnétique tel qu'il interagit avec ledit élément magnétique pour générer une force capable de déplacer ladite masse (3, 4) le long de ladite direction de déplacement (V1).

9. - Véhicule de transport à moteur comprenant :
- au moins un arbre rotatif (A) portant au moins une roue,
- un dispositif d'actionnement (1) selon l'une ou plusieurs des revendications précédentes, associé audit arbre rotatif (A).

10. - Procédé d'utilisation d'un dispositif d'actionnement, comprenant les phases consistant à :
- avoir un dispositif d'actionnement (1) selon l'une ou plusieurs des revendications 2 à 8,
- appliquer ledit dispositif d'actionnement (1) à un arbre rotatif (A) d'un véhicule de transport à moteur ;
- pendant une phase de décélération dudit véhicule de transport à moteur, déplacer lesdites masses (3, 4) de ladite position limite d'approche vers ladite position limite de recul,
- pendant une phase d'accélération dudit véhicule de transport à moteur, déplacer lesdites masses (3, 4) de ladite position limite de recul vers ladite position limite d'approche.
